# EUROPEAN PATENT SPECIFICATION

(11) **EP 3 611 813 B1**
(45) Date of publication and mention of the grant of the patent: **03.03.2021**
(21) Application number: 17905218.8
(22) Date of filing: 11.04.2017
(51) Int. Cl.: H02B 1/28, H02B 1/38

(54) **ELECTRIC DEVICE**
ELEKTRISCHE VORRICHTUNG
DISPOSITIF ÉLECTRIQUE

(43) Date of publication of application: 19.02.2020
(73) Proprietor: Mitsubishi Electric Corporation, Chiyoda-ku Tokyo 100-8310 (JP)
(72) Inventor: SEKI Koichiro, Tokyo 100-8310 (JP)
(74) Representative: Witte, Weller & Partner Patentanwälte mbB
(86) International application number: PCT/JP2017/014817
(87) International publication number: WO 2018/189807

(56) References cited:
- GB-A- 2 151 461
- JP-A- 2006 253 213
- JP-A- 2008 218 677
- JP-A- 2015 061 040
- JP-A- 2015 076 909
- JP-U- S53 133 131

## Description

### Technical Field

The present application relates to an electrical device providing a box body that houses the device body so that it can be removed from the device body outlet, and a door pivotally attached to the box body by a hinge to be openable and closable.

### Background Art

In an electrical device such as a control center or a switchboard, wherein a hinge is provided on the side of the box and the inside of the door, and wherein the door is rotated and opened and closed, in order to secure the opening angle of the door, it is necessary to provide a gap between the box and the door around the hinge.

In the electrical device of the above structure, by extending the box body side hinge to the door height as for the switchboard of Patent Literature 1 in order to prevent the intrusion of foreign solid material into the electrical device from the gap provided around the hinge of the door, dustproof packing is attached to a box side frame or an extension member as in the closed switchboard of Patent Literature 2 or to a structure for closing the gap between the door and the box, a pedestal is provided on the door side, by contacting the dustproof packing and the pedestal the gap between the door and the box is closed.

Patent Literature 3, according to its abstract, states that a housing device for a panel comprises a housing body having an opening portion on the front surface and a door provided on the opening portion in such a manner that the door is closable and openable. The device comprises a flange member one end of which is attached to an attaching surface 11a of the opening portion in such a manner that a seal packing can be interposed therebetween according to a sealing specification and the other end of which protrudes anteriorly from the opening portion and has a door contact portion formed in such a manner that a packing can be interposed according to the sealing specification between the door contact portion and the door at the protruding end. The housing body, the door, and the flange member are shared between models different in sealing specification.

Patent Literature 4, according to its abstract, states that an electric device storage housing includes: a housing body; and a door which is rotatably supported on the housing body through a hinge so as to open and close relative to an opening part of the housing body. Plate members are attached to an edge part of the housing body so as to protrude to the outer side from the edge part of the housing body in a Y direction and sandwich a first portion of a fixing plate of the hinge in a Z direction. A packing is attached to the inner side of the door so as to contact with a second portion of the fixing plate and tips of the plate members when the door is closed relative to the opening part of the housing body.

### Prior Art Document

### [Patent Literature]

[Patent Literature 1] JP 2014-166122 A
[Patent Literature 2] JP U 4-14404 A
[Patent Literature 3] JP 2008 218677 A
[Patent Literature 4] JP 2015 076909 A

### Disclosure of Invention

### Technical Problem

In Patent Literature 1, by extending the box body side hinge to the door height, and by closing the space between the door and the box body by the box body side hinge, it is possible to prevent intrusion of foreign solid material into the switchboard, but as it is necessary to secure a gap between the box body side hinge and the door so that the door and the box body side hinge do not interfere when the door is opened or closed, it was difficult to prevent the entry of foreign body such as fine foreign body and water. In addition, the box body side hinge has a shape difficult to manufacture and is expensive, when the height of the door is not fixed to a control center unit for example, if the height of the door changes due to a change, it is necessary to rework the box body side hinge, which increases the cost.

In the structure of Fig. 1 of Patent Literature 2, the dustproof packing attached to the box body side frame or the extension member is in contact with the pedestal provided on the door side, by closing the gap between the door and the box, it prevents the intrusion of foreign solid material into the switchboard, but the box body side frame as well as the extension member and the pedestal on the door side are necessary, which increases the number of parts and increases the cost.

The present application has been made in view of the above situation, and in the present application, a part of the hinge of an electrical device provides a box that houses the device body so that it can be removed from the device body, and a door pivotally attached to the box by a hinge to be openable and closable, and it is an object of the present application to effectively prevent foreign body on the outside part of the box body to penetrate into the inside of the box body from between the box body and the door with an affordable simple structure.

### Solution to Problem

Therefore, there is provided an electrical device according to claim 1.

### Advantageous Effects of Invention

As the present Application provides a box body that houses the device body so that is can be removed from the box body through a device body outlet of the box body, and a door pivotally attached to the box body by a hinge to be openable and closable, and further provides a sealing frame extending at least over an axial length of a hinge rotation shaft of the hinge, wherein an inside part of the sealing frame is attached to a main frame of an outer wall of the box body, and a tip end part of the sealing frame faces an inner wall surface of the door which is in a state of closing device body outlet, and a hinge part packing interposed between the opposite surface of a tip end part of the sealing frame to the door and the inner wall surface of the door to prevent foreign body outside the box body from entering the inside of the box body from between the box body and the door in the hinge part, it is possible to effectively prevent foreign body on the outside part of the box body to penetrate the inside of the box body from between the box body and the door with an affordable simple structure.

### Brief Description of Drawings

[Fig. 1] Fig. 1 is a view showing a first embodiment of the present application, and a perspective view showing a state in which the door of the electrical device is closed.
[Fig. 2] Fig. 2 is a view showing a first embodiment of the present application, and is a cross-sectional plan view taken along the line I-I of Fig. 1.
[Fig. 3] Fig. 3 is a view showing a first embodiment of the present application, and is a longitudinal-sectional side view taken along the line II-II of Fig. 1.
[Fig. 4] Fig. 4 is a view showing a first embodiment of the present application, and is a perspective view showing a state in which the door of the electrical device is opened.
[Fig. 5] Fig. 5 is a diagram showing a first embodiment of the present application, and is a cross-sectional plan view taken along the line III-III of Fig.4.
[Fig. 6] Fig. 6 is a view showing a first embodiment of the present application, and is a longitudinal-sectional side view taken along line IV-IV in Fig. 4.
[Fig. 7] Fig. 7 is a view showing a first embodiment of the present application, and is a perspective view showing the entire external form of the sealing frame and the hinge part packing.
[Fig. 8] Fig. 8 is a diagram showing a second embodiment of the present application, and is a cross-sectional plan view corresponding to a cross-sectional plan view taken along the line II of Fig. 1.
[Fig. 9] Fig. 9 is a view showing a second embodiment of the present application, and is a longitudinal-sectional side view corresponding to the longitudinal-sectional side view taken along the line II-II of Fig. 1.
[Fig. 10] Fig. 10 is a diagram showing a second embodiment of the present application, and is a cross-sectional plan view corresponding to a cross-sectional plan view taken along line III-III of Fig. 4.
[Fig. 11] Fig. 11 is a diagram showing a third embodiment of the present application, and is a cross-sectional plan view corresponding to a cross-sectional plan view taken along the line II of Fig. 1.
[Fig. 12] Fig.12 is a diagram showing a third embodiment of the present application, and is a cross-sectional plan view corresponding to a cross-sectional plan view taken along line III-III of Fig. 4

### Description of Embodiments

### First Embodiment

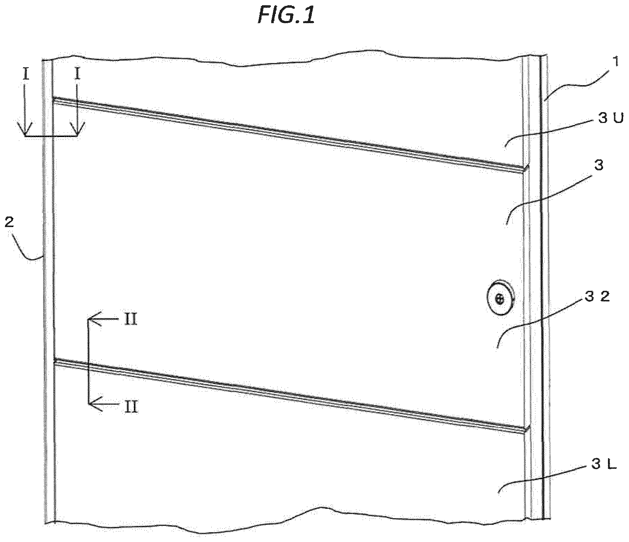

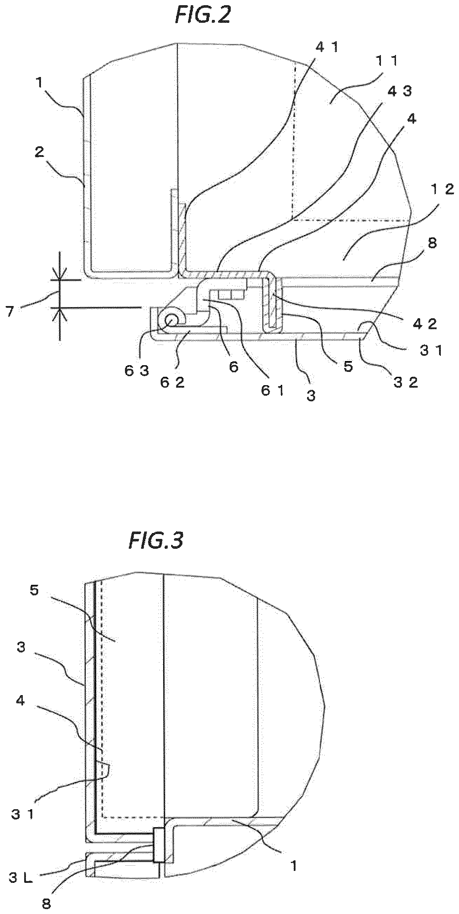

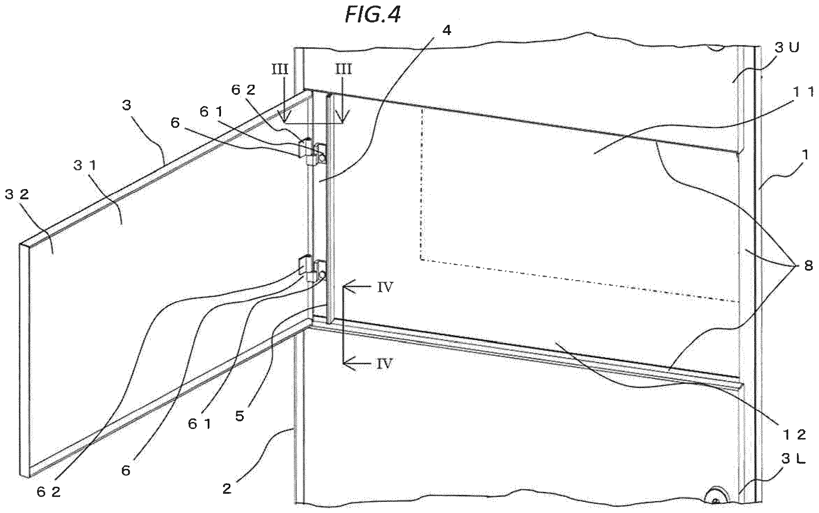

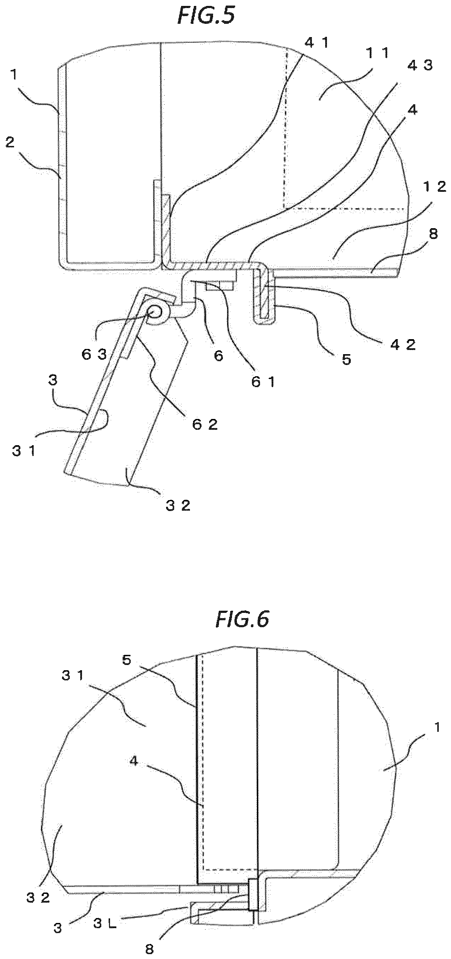

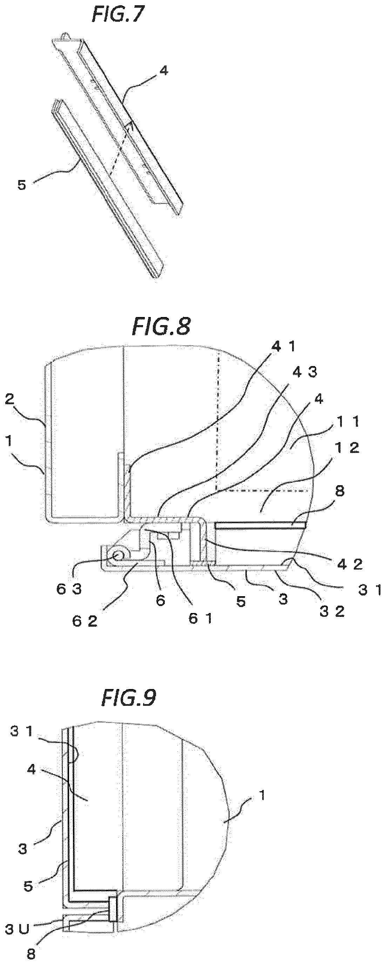

The first embodiment of the present application will be described below with reference to Fig. 1, Fig. 2, Fig. 3, Fig. 4, Fig. 5, Fig. 6 and Fig. 7. Fig. 1 is a perspective view showing a state in which the door of the electrical device is closed, Fig. 2 is a cross-sectional plan view taken along the line I-I of Fig. 1, Fig. 3 is a longitudinal-sectional side view taken along the line II-II of Fig. 1, Fig. 4 is a perspective view showing a state in which the door of the electrical device is opened, Fig. 5 is a cross-sectional plan view taken along the line III-III of Fig.4, Fig. 6 is a longitudinal-sectional side view taken along line IV-IV in Fig. 4, Fig. 7 is a perspective view showing the entire external form of the sealing frame and the hinge part packing.

The electrical device according to the first embodiment, as illustrated in Figs. 1 to 7, has a box body 1 of an electrical device, a device body 11, a device body outlet 12 for taking out the device body 11 from the box body 1 as required during maintenance and inspection, a main frame 2 of the box body 1, a door 3 pivotally attached to the box body 1 so as to be openable and closable, an inner wall surface 31 of the door, a free end 32 of the door, an upper door (being a door of an upper electrical device) 3U, a lower door (being a door of a lower electrical device) 3L, a sealing frame 4 fixed to the main frame 2, an inside part 41 of the sealing frame 4, a tip end part 42 of the sealing frame 4, a middle part 43 of the sealing frame 4, a hinge packing 5, a plurality of hinges 6 disposed at an upper part and a lower part of the door 3, one piece of each hinge 6 (being a piece fixed to the side of the box 1) 61, the other piece of each hinge 6 (being a piece fixed to the side of the door 3) 62, a hinge rotation shaft 63 of the respective hinges 6 (being shafts which pivotally connect one piece 61 and the other piece 62 to constitute the hinge 6), a gap 7 between the box body 1 and the door 3, and a periphery part packing 8.

In the electrical device of the present embodiment, a Z-shaped sealing frame 4 is attached to a main frame 2 which is a vertical frame of the box body 1, one piece of the hinge 6 (being the piece on the box side) 61 and the hinge part packing 5 are attached to the sealing frame 4 and the other piece (being the piece on the door side) 62 of the hinge 7 is attached to the door 3, by inserting the hinge rotation shaft 63 across the two pieces 61 and 62 into one piece 61 of the hinge 6 and the other piece 62 of the hinge 6, the door 3 is attached to the box body 1 so as to be freely opened and closed.

Here, the gap 7 between the box body 1 and the door 3 will be described. Inside the box body 1 of the electrical device, for example, a device body 11 such as a device and components necessary for the function as a switchboard is housed in the inside part, for example, for maintenance of the device body 11 in the box body 1, the device body 11 may be pulled out of the box body 1, or when checking the state of the component members, the door 3 is always opened and closed. In that case, since the door 3 is in a rotational movement by the hinge rotation shaft 63, in the electrical device in which the hinge 6 is provided on the side of the box body 1 and the inside of the door 3, it is necessary to provide a gap 7 between the box body 1 and the door 3.

On the other hand, since the electrical device such as the switchboard is installed in various places, for example, to prevent the operator of the electrical device from accidentally touching the internal charging part, also, to prevent insects and small animals to intrude into the electrical device and cause a short circuit accident in the charging part, and to prevent water from entering the switchboard and causing equipment failure, it is necessary to protect the device body 11 inside the box body 1 of the electrical device from foreign body, such as water, that could penetrate into the inside of the electrical device from the outside.

In the electrical device according to the first embodiment, a structure capable of opening and closing the door 3 and a structure for protecting against foreign body such as fine foreign body and water are provided, a Z-shaped sealing frame 4 on the side of the box body 1, is attached to the main frame 2 of the box body 1 as a shielding plate structure covering the entire height direction of the door 3, the hinge part packing 5 is attached over the entire height direction of the door 3 to the Z-shaped sealing frame 4, when the door 3 is closed, the gap 7 between the box body 1 and the door 3 is closed, and the door 3 and the peripheral packing (being remaining part other than the hinge part) 8 are in contact with each other except for the hinge part.

The part of the hinge 6 on the side of the box body 1 is constituted only by the Z-shaped sealing frame 4 on the side of the box body 1 and the piece 61 of the hinge 6 on the side of the box body 1, the number of parts can be reduced compared to a structure in which the dustproof packing of the box body side frame or the extension member is in contact with the pedestal on the door side as shown in Fig. 1 of Patent Literature 2. In addition, by adopting the small hinge 6 on the side of the box body 1 and the affordable parts of the simple-shaped Z-shaped sealing frame 4 on the side of the box body 1, compared with the structure which extends and shields the hinge by the side of the box body 1 to the height of the door 3 as shown in Patent Literature 1, there is an effect of cost reduction.

Further, by using the piece 61 of the hinge 6 on the side of the box body 1 and the Z-shaped sealing frame 4 on the side of the box body 1 as separate parts, even if the height of the door 3 changes, only the Z-shaped sealing frame 4 can be replaced, and the same piece 61 of the hinge 6 on the side of the box body 1 can be diverted.

Therefore, according to the first embodiment, while preventing foreign body from entering the box body 1 from the gap 7 between the box body 1 and the door 3 at the hinge 6 and protecting the device body 11 in the box body 1 from foreign body, an affordable electrical device can be configured.

From another point of view, the electrical device according to the first embodiment, provides the box body 1 that houses the device body 11 so that is can be removed from the box body 1 through the device body outlet 12 of the box body 1, and the door 3 pivotally attached to the box body 1 by the hinge 6 to be openable and closable.

The electrical device according to the first embodiment further provides the sealing frame 4 extending at least over an axial length of the hinge rotation shaft 63 of the hinge 6, wherein the inside part 41 of the sealing frame 4 is attached to the main frame 2 of the outer wall of the box body 1, and a tip end part 42 of the sealing frame 4 faces an inner wall surface 31 of the door 3 which is in a state of closing device body outlet 12.

The electrical device according to the first embodiment further provides a hinge part packing 5 interposed between the opposite surface of a tip end part 42 of the sealing frame 4 to the door 3 and the inner wall surface 31 of the door 3 to prevent foreign body outside the box body 1 from entering the inside of the box body 1 from between the box body 1 and the door 3 in the hinge part.

Also, in the electrical device of such structure, the hinge packing 5 is attached to the tip end part 42 of the sealing frame 4, and the sealing frame 4 has a middle part 43 parallel to the inner wall surface 31 of the door 3 in a state in which the device body outlet 12 is closed, between the inside part 41 and the tip end part 42. The sealing frame 4 is formed in the Z shape by the inside part 41, the tip end part 42 and the middle part 43. The inside part 41, the tip end part 42 and the middle part 43 are formed of a single plate material. One piece 61 of the hinge 6 is attached to the middle part 43 of the sealing frame 4, and the other piece 62 of the hinge 6 is attached to the inner wall surface 31 of the door 3. The peripheral part packing 8 is provided, preventing foreign body outside the box body 1 from intruding into the inside of the box body from the area between the box body 1 and the door 3 between the periphery of the side of the box body 1 of the door 3 and the box body 1. The periphery part packing 8 is attached to the box body 1. The hinge part packing 5 and the periphery part packing 8 are configured to prevent foreign body from entering the box body 1 from the outside of the box body 1. In this example, the hinge part packing 5 is located closer to the free end 32 of the door 3 than the hinge 6.
Further, the periphery part packing 8 can be attached to the door 3 side.

### Second Embodiment

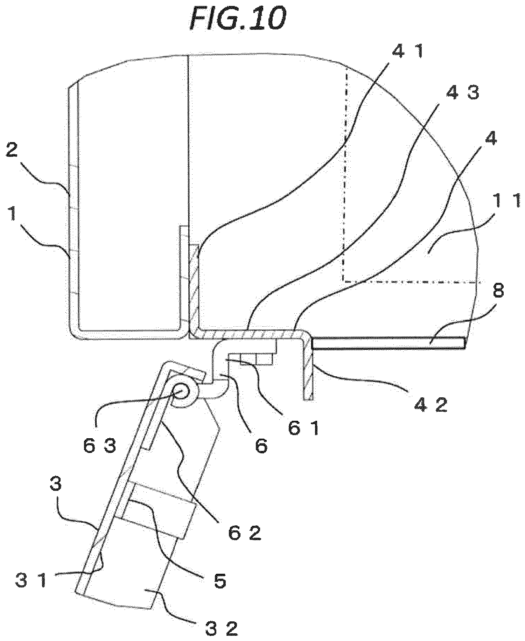

The second embodiment of the present application will be described below with reference to Fig. 2, Fig. 8, Fig. 9 and Fig. 10. Fig 8 is a cross-sectional plan view corresponding to a cross-sectional plan view taken along the line II of Fig. 1, Fig. 9 is a longitudinal-sectional side view corresponding to the longitudinal-sectional side view taken along the line II-II of Fig. 1, and Fig. 10 is a cross-sectional plan view corresponding to a cross-sectional plan view taken along line III-III of Fig. 4. Hereinafter, the second embodiment will be described with parts different from the first embodiment, and the description of the same parts as the first embodiment will be omitted.

In the first embodiment described above, the hinge part packing 5 is attached to the Z-shaped sealing frame 4 as shown in Figs. 2 and 5. In the second embodiment, as illustrated in Fig. 8 and Fig. 10, an example in which the hinge part packing 5 is attached to the door 3 is shown. Further, the periphery part packing 5 can be attached to the inner wall surface of the door 3.

When the door 3 is closed, as shown in Figs. 8 and 9, the gap 7 between the Z-shaped sealing frame 4 and the door 3 is closed by the hinge part packing 5 of the door 3, it is structured to protect the device body 11 inside the box 1 from the foreign body which may enter from the gap 7 between the box body 1 and the door 3, the same effects as those of the first embodiment can be obtained.

### Third Embodiment

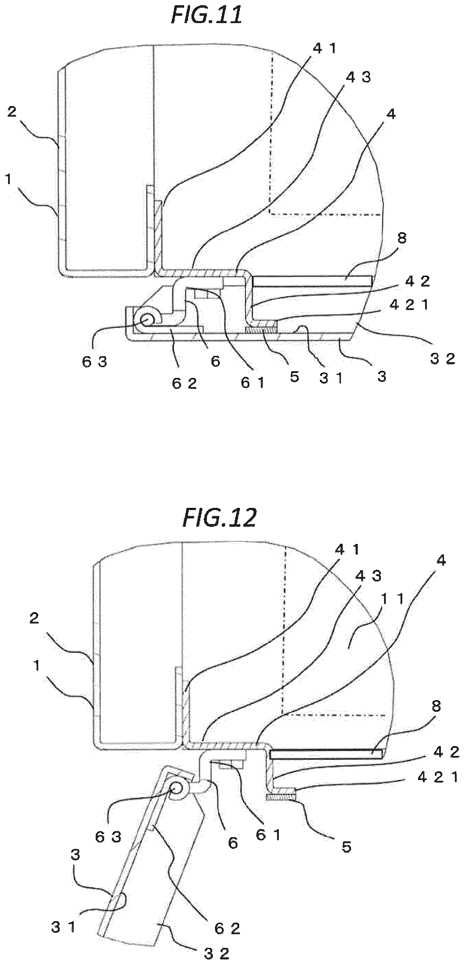

The third embodiment of the present application will be described below with reference to Fig. 11 and Fig. 12. Fig. 11 is a cross-sectional plan view corresponding to a cross-sectional plan view taken along the line II of Fig. 1. Fig.12 is a cross-sectional plan view corresponding to a cross-sectional plan view taken along line III-III of Fig. 4. Hereinafter, the third embodiment will be described with parts different from the first embodiment, and the description of the same parts as the first embodiment will be omitted.

In the first embodiment described above, although the hinge packing 5 is attached to the Z-shaped sealing frame 4, in the third embodiment, as shown in Figs. 11 and 12, a W-shaped sealing frame 4 is attached to the main frame 2 which is the vertical frame, the piece (being the one piece) 61 on the side of the box body 1 of the hinge 6 and the hinge packing 5 are attached to the W-shaped sealing frame 4.

When the door 3 is closed, as shown in Figs. 11, the gap 7 between the W-shaped sealing frame 4 and the door 3 is closed by the hinge part packing 5, it is structured to protect the device body 11 inside the box 1 from the foreign body which may enter from the gap 7 between the box body 1 and the door 3, the same effects as those of the first embodiment can be obtained.

From another point of view, the electrical device of the third embodiment has a tip end part 42 of the sealing frame 4 is formed in an L shape, a top end part 421 parallel to the inner wall surface 31 of the door 3 with the device body outlet 12 closed, and the hinge part packing 5 is interposed between the inner wall surface 31 of the door 3 and the top end part 421 in a state where the device body outlet 12 is closed. Further, the hinge part packing 5 is attached to the surface of the top end part 421 parallel to the inner wall surface 31 and opposed to the inner wall surface 31 of the closed door 3.

In the drawings, the same reference numerals indicate the same or corresponding parts.

Although the present application is described above in terms of an exemplary embodiment, it should be understood that the various features, aspects and functionality described in the embodiment are not limited in their applicability to the particular embodiment with which they are described, but instead can be applied, alone or in various combinations to the embodiment, as long as they fall within the scope of the appended claims.

### Reference Signs List

- 1: Box body of the electrical device,
- 11: Device body,
- 12: Device body outlet,
- 2: Main frame of the box body,
- 3: Door,
- 31: Inner wall surface of the door,
- 21: Free end of the door,
- 3U: Upper door,
- 3L: Lower door,
- 4: Sealing frame,
- 41: Inside part of the sealing frame,
- 42: Tip end part of the sealing frame,
- 421: Top end part of the tip end part of the sealing frame,
- 43: Middle part of the sealing frame,
- 5: Hinge part packing,
- 6: Hinge,
- 61: One piece of the hinge,
- 62: Other piece of the hinge,
- 63: Hinge rotation shaft,
- 7: Gap between the box body and the door, and
- 8: Periphery part packing.

## Claims

1. An electrical device comprising:
a box body (1) that houses the device body (11) so that is can be removed from the box body (1) through a device body outlet (12) of the box body (1);
a door (3) pivotally attached to the box body (1) by a hinge (6) to be openable and closable;
a sealing frame (4) extending at least over an axial length of a hinge rotation shaft (63) of the hinge (6), wherein an inside part (41) of the sealing frame (4) is attached to a main frame (2) of an outer wall of the box body (1), and a tip end part (42) of the sealing frame (4) faces an inner wall surface (31) of the door (3) which is in a state of closing device body outlet (12); and
a hinge part packing (5) interposed between the opposite surface of a tip end part (42) of the sealing frame (4) to the door (3) and the inner wall surface (31) of the door (3) to prevent foreign body outside the box body from entering the inside of the box body (1) from between the box body (1) and the door (3) in the hinge part,
**characterized in that** the sealing frame (4) has a middle part (43) between the inside part (41) and the tip end part, the middle part (43) being parallel to the inner wall surface of the door (3) which is in the state of closing device body outlet (12), and
wherein the sealing frame (4) is formed in a Z shape by the inside part (41), the tip end part (42), and the middle part (43),
wherein one piece (61) of the hinge (6) is attached to the middle part (43) of the sealing frame (4), and the other piece (62) of the hinge (6) is attached to the inner wall surface (31) of the door (3).

2. The electrical device according to claim 1, wherein
the hinge part packing (5) is attached to the tip end part (42) of the sealing frame (4).

3. The electrical device according to claim 1, wherein
the hinge part packing (5) is attached to the inner wall surface (31) of the door (3).

4. The electrical device according to any of claims 1 to 3, wherein
the tip end part (42) is formed in an L shape, and has a top end part (421) parallel to the inner wall surface (31) of the door (3) which is in a state of closing device body outlet (12), and
the hinge part packing (5) is interposed between the top end part (421) and the inner wall surface (31) of the door (3) which is in the state of closing device body outlet (12).

5. The electrical device according to any of claims 1 to 4, wherein
the inside part (41), the tip end part (42), and the middle part (43) are formed of a single plate material.

6. The electrical device according to any one of claims 1 to 5, wherein
a periphery part packing (8) is provided between the periphery of the door (3) on the side of the box body (1) and the box body (1) to prevent foreign body outside the box body (1) to penetrate into the inside of the box body (1) from between the box body (1) and the door (3).

7. The electrical device according to claim 6, wherein
the periphery part packing (8) is attached to the box body (1).

8. The electrical device according to claim 6, wherein
the periphery part packing (8) is attached to the door (3) .

9. The electrical device according to any one of claims 6 to 8, wherein
the hinge part packing (5) and the periphery part packing (8) prevent the foreign body to penetrate into the inside of the box body (1) from the outside of the box body (1) .

10. The electrical device according to any one of claims 1 to 9, wherein
the hinge packing (5) is located closer to a free end (32) of the door (3) than the hinge (6).

## Patentansprüche

1. Elektrische Vorrichtung, die aufweist:
einen Kistenkörper (1), der den Vorrichtungskörper (11) aufnimmt, so dass er aus dem Kistenkörper (1) durch einen Vorrichtungskörperauslass (12) des Kistenkörpers (1) entfernt werden kann;
eine Tür (3), die schwenkbar an dem Kistenkörper (1) durch ein Scharnier (6) angebracht ist, um öffenbar und verschließbar zu sein;
einen Dichtungsrahmen (4), der sich zumindest über eine axiale Länge einer Scharnierdrehachse (63) des Scharniers (6) erstreckt, wobei ein Innenteil (41) des Dichtungsrahmens (4) an einem Hauptrahmen (2) einer äußeren Wand des Kistenkörpers (1) angebracht ist und wobei ein Endteil (42) des Dichtungsrahmens (4) einer Innenwandfläche (31) der Tür (3) zugewandt ist, die sich in einem Zustand eines Verschließens des Vorrichtungskörperauslasses (12) befindet; und
eine Scharnierteilverkleidung (5), die zwischen der Fläche eines Endteils (42) des Dichtungsrahmens (4) gegenüberliegend zur Tür (3) und der Innenwandfläche (31) der Tür (3) angeordnet ist, um einen Fremdkörper außerhalb des Kistenkörpers an einem Eintreten ins Innere des Kistenkörpers (1) von zwischen dem Kistenkörper (1) und der Tür (3) in den Scharnierteil zu hindern,
**dadurch gekennzeichnet, dass** der Dichtungsrahmen (4) einen Mittelteil (43) zwischen dem Innenteil (41) und dem Endteil aufweist, wobei der Mittelteil (43) parallel zur Innenwandfläche der Tür (3) ist, die sich in dem Zustand eines Verschließens eines Vorrichtungskörperauslasses (12) befindet, und
wobei der Dichtungsrahmen (4) durch den Innenteil (41), den Endteil (42) und den Mittelteil (43) in einer Z-Form ausgebildet ist,
wobei ein Stück (61) des Scharniers (6) an dem Mittelteil (43) des Dichtungsrahmens (4) angebracht ist und wobei das andere Stück (62) des Scharniers (6) an der Innenwandfläche (31) der Tür (3) angebracht ist.

2. Elektrische Vorrichtung nach Anspruch 1, wobei
die Scharnierteilverkleidung (5) an dem Endteil (42) des Dichtungsrahmens (4) angebracht ist.

3. Elektrische Vorrichtung nach Anspruch 1, wobei
die Scharnierteilverkleidung (5) an der Innenwandfläche (31) der Tür (3) angebracht ist.

4. Elektrische Vorrichtung nach einem der Ansprüche 1 bis 3, wobei
der Endteil (42) in einer L-Form ausgebildet ist und einen oberen Endteil (421) aufweist, der parallel zur Innenwandfläche (31) der Tür (3) ist, die sich in einem Zustand eines Verschließens eines Vorrichtungskörperauslasses (12) befindet, und
die Scharnierteilverkleidung (5) zwischen dem oberen Endteil (421) und der Innenwandfläche (31) der Tür (3) angeordnet ist, die sich in dem Zustand eines Verschließens eines Vorrichtungskörperauslasses (12) befindet.

5. Elektrische Vorrichtung nach einem der Ansprüche 1 bis 4, wobei
der Innenteil (41), der Endteil (42) und der Mittelteil (43) aus einem einzigen Plattenmaterial ausgebildet sind.

6. Elektrische Vorrichtung nach einem der Ansprüche 1 bis 5, wobei
eine Randteilverkleidung (8) zwischen dem Rand der Tür (3) auf der einen Seite des Kistenkörpers (1) und dem Kistenkörper (1) vorgesehen ist, um einen Fremdkörper außerhalb des Kistenkörpers (1) an einem Eindringen in das Innere des Kistenkörpers (1) von zwischen dem Kistenkörper (1) und der Tür (3) zu hindern.

7. Elektrische Vorrichtung nach Anspruch 6, wobei
die Randteilverkleidung (8) an dem Kistenkörper (1) angebracht ist.

8. Elektrische Vorrichtung nach Anspruch 6, wobei
die Randteilverkleidung (8) an der Tür (3) angebracht ist.

9. Elektrische Vorrichtung nach einem der Ansprüche 6 bis 8, wobei
die Scharnierteilverkleidung (5) und die Randteilverkleidung (8) den Fremdkörper daran hindern, in das Innere des Kistenkörpers (1) von außerhalb des Kistenkörpers (1) einzudringen.

10. Elektrische Vorrichtung nach einem der Ansprüche 1 bis 9, wobei
sich die Scharnierteilverkleidung (5) näher zu einem freien Ende (32) der Tür (3) als das Scharnier (6) befindet.

## Revendications

1. Dispositif électrique, comprenant :
un corps (1) de boîtier qui abrite le corps (11) de dispositif de façon à permettre le retrait de celui-ci du corps (1) de boîtier à travers une sortie (12) pour corps de dispositif du corps (1) de boîtier ;
une porte (3) fixée pivotante au corps (1) de boîtier par une charnière (6) pour pouvoir être ouverte et fermée ;
un cadre faisant étanchéité (4) s'étendant au moins sur une longueur axiale d'un arbre de rotation (63) de charnière de la charnière (6), une partie intérieure (41) du cadre faisant étanchéité (4) étant fixée à un cadre principal (2) d'une paroi extérieure du corps (1) de boîtier et une partie extrémité de bout (42) du cadre faisant étanchéité (4) étant en regard d'une surface de paroi intérieure (31) de la porte (3) qui se trouve dans un état de fermeture de la sortie (12) pour corps de dispositif ; et
une garniture (5) de partie charnière interposée entre la surface d'une partie extrémité de bout (42) du cadre faisant étanchéité (4) opposée à la porte (3) et la surface de paroi intérieure (31) de la porte (3) afin d'empêcher qu'un corps étranger extérieur au corps de boîtier ne pénètre à l'intérieur du corps (1) de boîtier par l'espace entre le corps (1) de boîtier et la porte (3) dans la partie charnière,
**caractérisé en ce que** le cadre faisant étanchéité (4) présente une partie intermédiaire (43) entre la partie intérieure (41) et la partie extrémité de bout, la partie intermédiaire (43) étant parallèle à la surface de paroi intérieure de la porte (3) qui se trouve dans l'état de fermeture de la sortie (12) pour corps de dispositif, et
le cadre faisant étanchéité (4) étant doté d'une forme en Z constituée par la partie intérieure (41), la partie extrémité de bout (42) et la partie intermédiaire (43),
une pièce (61) de la charnière (6) étant fixée à la partie intermédiaire (43) du cadre faisant étanchéité (4) et l'autre pièce (62) de la charnière (6) étant fixée à la surface de paroi intérieure (31) de la porte (3).

2. Dispositif électrique selon la revendication 1, dans lequel
la garniture (5) de partie charnière est fixée à la partie extrémité de bout (42) du cadre faisant étanchéité (4).

3. Dispositif électrique selon la revendication 1, dans lequel
la garniture (5) de partie charnière est fixée à la surface de paroi intérieure (31) de la porte (3).

4. Dispositif électrique selon l'une quelconque des revendications 1 à 3, dans lequel
la partie extrémité de bout (42) est dotée d'une forme en L et présente une partie extrémité supérieure (421) parallèle à la surface de paroi intérieure (31) de la porte (3) qui se trouve dans un état de fermeture de la sortie (12) pour corps de dispositif, et
la garniture (5) de partie charnière est interposée entre la partie extrémité supérieure (421) et la surface de paroi intérieure (31) de la porte (3) qui se trouve dans l'état de fermeture de la sortie (12) pour corps de dispositif.

5. Dispositif électrique selon l'une quelconque des revendications 1 à 4, dans lequel la partie intérieure (41), la partie extrémité de bout (42) et la partie intermédiaire (43) sont formées d'un seul matériau en plaque.

6. Dispositif électrique selon l'une quelconque des revendications 1 à 5, dans lequel une garniture (8) de partie périphérique est placée entre la périphérie de la porte (3) du côté du corps (1) de boîtier et le corps (1) de boîtier afin d'empêcher qu'un corps étranger extérieur au corps (1) de boîtier ne pénètre à l'intérieur du corps (1) de boîtier par l'espace entre le corps (1) de boîtier et la porte (3).

7. Dispositif électrique selon la revendication 6, dans lequel
la garniture (8) de partie périphérique est fixée au corps (1) de boîtier.

8. Dispositif électrique selon la revendication 6, dans lequel
la garniture (8) de partie périphérique est fixée à la porte (3).

9. Dispositif électrique selon l'une quelconque des revendications 6 à 8, dans lequel
la garniture (5) de partie charnière et la garniture (8) de partie périphérique empêchent le corps étranger de pénétrer à l'intérieur du corps (1) de boîtier depuis l'extérieur du corps (1) de boîtier.

10. Dispositif électrique selon l'une quelconque des revendications 1 à 9, dans lequel
la garniture (5) de charnière est située plus près d'une extrémité libre (32) de la porte (3) que la charnière (6).
